# EUROPEAN PATENT SPECIFICATION

(11) **EP 3 466 246 B1**
(45) Date of publication and mention of the grant of the patent: **09.08.2023**
(21) Application number: 17859491.7
(22) Date of filing: 11.10.2017
(51) Int. Cl.: A01F 15/08, G06Q 10/08

(54) **CROP MANAGEMENT SYSTEM**
ERNTEGUTMANAGEMENTSYSTEM
SYSTÈME DE GESTION DE RÉCOLTE

(30) Priority: 12.10.2016 JP 2016201264
(43) Date of publication of application: 10.04.2019
(73) Proprietor: Kubota Corporation, Osaka-shi, Osaka 556-8601 (JP)
(72) Inventor: OKAMURA, Seiichi, Sakai-shi Osaka 590-0823 (JP); TAKECHI, Kanta, Sakai-shi Osaka 590-0823 (JP); NAITO, Daisuke, Sakai-shi Osaka 590-0823 (JP)
(74) Representative: Müller-Boré & Partner Patentanwälte PartG mbB
(86) International application number: PCT/JP2017/036725
(87) International publication number: WO 2018/070391

(56) References cited:
- JP-A- 2009 136 195
- JP-A- 2010 089 870
- JP-B1- 5 836 465
- JP-B2- 4 847 099
- JP-B2- 5 733 764
- US-A1- 2007 185 612
- US-A1- 2009 107 349
- US-A1- 2012 048 129
- US-A1- 2015 310 323
- US-A1- 2015 310 323

## Description

### [TECHNICAL FIELD]

The present invention relates to a crops management system.

### [BACKGROUND ART]

Conventionally, agricultural work has been carried out in which, after the farm pasture or the like is taken in a roll baler or the like, the grass is formed into a roll by the roll baler and discharged again to the farm (for example, Patent Document 1).

The roll bale discharged from the roll baler is generally stacked in a storage place by a transport vehicle such as a truck.

US 2015/310323 A1 describes a system for tracking a harvested agricultural product unit including a magazine configured to be disposed on an agricultural implement and to facilitate insertion of one or more stakes into the harvested agricultural product unit.

### [RELATED ART DOCUMENTS]

### [PATENT DOCUMENTS]

[Patent Document 1] Microfilm of Japanese Utility Model Application Publication No. S61-145956

### [DISCLOSURE OF THE INVENTION]

### [PROBLEMS TO BE SOLVED BY THE INVENTION]

As shown in FIG. 6 and the like of Patent Document 1, immediately after forming with the roll baler, the roll bale is scattered on the farm, but in order to individually grasp the roll bale, the roll bale or operators were writing handwriting on the packaging material for packing the roll bale and filling out notes such as dates and numbers.

However, the task of filling in the roll baler is tough and there are cases where notes cannot be seen when the roll balers are stacked in the storage location, so it was difficult to grasp the contents of the memo.

It is thus an object of the present invention to provide a crops management system capable of easily grasping information on a forming material formed by a forming machine.

### [MEANS OF SOLVING THE PROBLEMS]

The present invention is defined by independent claim 1. Further aspects are defined in the dependent claims.

### [EFFECTS OF THE INVENTION]

According to the present invention, it is possible to easily grasp information on a forming material formed by a forming machine.

### [BRIEF DESCRIPTION OF THE DRAWINGS]

FIG. 1 is a view illustrating a crops management system according to a first embodiment of the present invention.
FIG. 2 is a whole view illustrating a roll baler according to the first embodiment.
FIG. 3 is a view illustrating a state where the roll baler travels in an agricultural field to form a formed material according to the first embodiment.
FIG. 4A is a view illustrating a tag identifying information, a weight, and a moisture obtained by an obtaining part according to the first embodiment.
FIG. 4B is a view illustrating the weight, the moisture, and the tag identifying information related to each other by a relating part according to the first embodiment.
FIG. 5A is a view illustrating the tag identifying information, the weight, and the moisture obtained by the obtaining part according to the first embodiment.
FIG. 5B is a view illustrating the weight, the moisture, and the tag identifying information related to each other by the relating part according to the first embodiment.
FIG. 6 is a view illustrating a state where a roll-formed material is stored in a storage place.
FIG. 7 is a view illustrating a crops management system according to a second embodiment of the present invention.

### [BEST MODE FOR CARRYING OUT THE INVENTION]

Hereinafter, embodiments of the present invention will be described with reference to the drawings.

### (First embodiment)

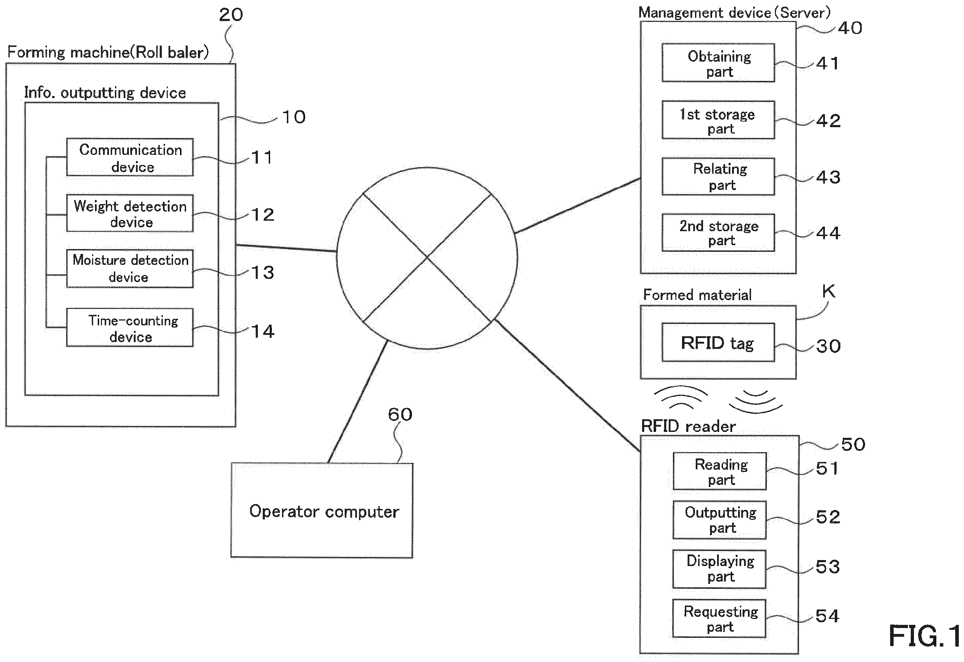

FIG. 1 shows a schematic diagram of a crops management system.

Crops management system is a system that manages crops such as grass, hay, rice and the like. Crops are not limited to those mentioned above.

The crops management system includes an information output device 10 provided in a forming machine. The forming machine 20 is a machine that collects crops such as farms and shapes the collected crops into a predetermined shape in a roll shape or a rectangular shape (a cube shape). The forming machine 20 is, for example, a roll baler for shaping a crop into a roll shape, a hole crop or the like.

First, taking the roll baler as an example, the forming machine 20 will be described.

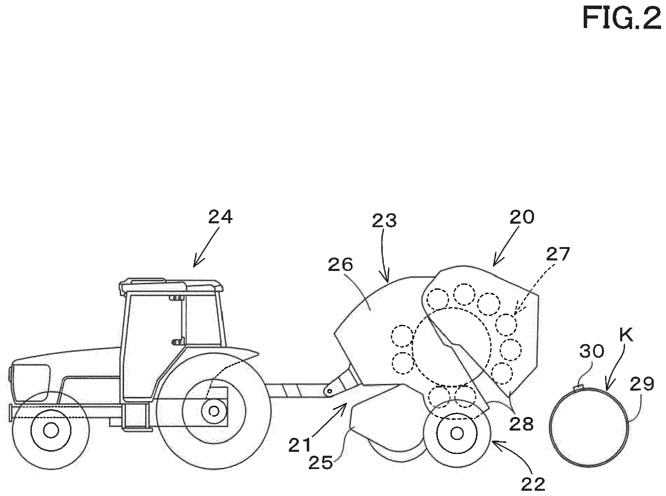

As shown in FIG. 2, the roll baler 20 includes a vehicle body 21, a traveling device 22 provided on the vehicle body 21, and a forming device 23 provided on the vehicle body 21. The traveling device 22 is a wheel type running device 22 having wheels.

The traveling device 22 may be a crawler type traveling device 22 having a crawler belt.

The roll baler 20 may be a self-propelled type that has a prime mover such as an engine or the like, and may be a pulling type pulled by a towing vehicle 24 such as a tractor and the like. In this embodiment, the roll baler 20 is the pulling type connected to a tractor or the like via a connecting portion at a front portion of the vehicle body 21.

The forming device 23 includes an intake part 25 for taking in the crop to be formed into a roll, a housing portion 26 for accommodating the crop taken in by the intake part 25, a forming portion 27 for forming the crops taken into the housing portion 26 into a material K rolled by a roller or the like, and a discharge portion 28 for discharging the forming material K formed by the forming portion 27.

Thus, the crop is formed into a roll-shaped forming material K of a predetermined size by the forming device 23, and is discharged to the outside after forming. For the sake of convenience of explanation, the rolled forming material K may be referred to as a roll formed material.

The forming device 23 is not limited to the above-described configuration, and any apparatus may be used as long as the apparatus forms the crop in a predetermined shape. For example, the forming device 23 may be of a chain type in which crops are formed in a roll shape by a chain, a belt type by which a belt is formed into a roll shape by a belt, or another type.

In addition, the forming device 23 preferably has a mechanism (a winding mechanism) for winding the packing material 29 such as a net on the side surface of the roll forming material K. In this case, the packing material 29 can be discharged to the outside from the discharge portion 28 in a state of being wrapped around the side surface of the roll forming material K.

As shown in FIG. 1, the information output device 10 is a device capable of outputting information (hereinafter referred to as "forming material information") on the forming material K formed by the forming device 23.

Specifically, the information output device 10 includes a communication device 11, a weight detection device 12, a moisture detection device 13, and a time counting device 14. The weight detection device 12, the moisture detection device 13, and the time counting device 14 are connected to the communication device 11.

The communication device 11 is a device that performs a short range communication or a long range communication in wireless or the like, and is connectable to a device external to the forming machine 20. For example, the communication device 11 is a communication module that performs wireless communication using the Wi-Fi (Wireless Fidelity (a registered trademark) of IEEE 802.11 series which is a communication standard, the Bluetooth (a registered trademark) of IEEE 802.15 series and the like.

It should be noted that the communication device 11 may be a communication module that performs the wireless communication via a cellular phone communication network, a communication module that performs wireless communication via a data communication network, or another communication module.

The weight detection device 12 is a device that detects the weight of the forming material K formed by the forming device 23, that is, the weight of the forming material K when discharged to the outside. The weight detection device 12 is composed of a load cell or the like provided in the forming device 23.

The weight detection device 12 outputs the detected weight to the communication device 11 as the forming material information. It is preferable that the weight detection device 12 adds the management information such as the management number to the output weight and outputs it to the communication device 11 every time the weight is outputted.

The moisture detection device 13 is a device that detects the moisture (the water content) of the forming material K formed by the forming device 23, that is, moisture of the forming material K at the time of discharge to the outside.

The moisture detection device 13 measures the moisture of the forming material K using the dielectric constant of the forming material K or measures the moisture (the moisture content) of the forming material K using the electric resistance of the forming material K or a sensor that measures moisture by irradiating the forming material K with infrared rays or microwaves or the like.

The moisture detection device 13 may be any device as long as it detects moisture.

The moisture detection device 13 outputs the detected moisture to the communication device 11 as forming material information. It is preferable that the moisture detection device 13 adds management information such as a management number to the moisture to be output and outputs it to the communication device 11 every time moisture is outputted.

The time counting device 14 is a device that measures the time during which the forming material K is formed by the forming machine 20. The time counting device 14 is, for example, a timer for measuring time (date, time of Christian calendar year, month, day and the like.). Based on the operation of the forming device 23, the time counting device 14 transmits to the communication device 11 the start time at which the forming of the forming material K is started, the end time at which the forming of the forming material K was completed, the discharge time at which the forming material K was discharged.

In the above-described embodiment, the information output device 10 includes the weight detection device 12, the moisture detection device 13, and the time counting device 14, but any one of the weight detection device 12, the moisture detection device 13, and the time counting device 14 as long as it has the above-mentioned properties. In addition, the information output device 10 may be any device that outputs information on the forming material K in the forming machine 20, and is not limited to only the weight detection device 12, the moisture detection device 13, and the time counting device 14.

The communication device 11 transmits the forming material information (the weight, the moisture, the time) and the control information to the external computer every time the work of the roll baler 20 is finished or every time the roll forming material K is formed by the roll baler 20, or regularly. In the above-described embodiment, the weight detection device 12 and the moisture detection device 13 attach the management information to the measured values (the weight, the moisture).

Alternatively, the communication device 11 may attach the management information every time the measurement value (the weight, the moisture) is acquired. In addition, when the communication device 11 transmits the forming material information and the management information to an external computer, it is preferable to transmit at least the date.

As shown in FIG. 1, the crops management system includes a wireless tag, that is, an RFID tag (Radio Frequency Identification) 30. The RFID tag 30 is provided on the forming material K. The RFID tag 30 is a tag that transmits identifying information of at least the forming material K.

The identifying information is information for specifying, that is, identifying the forming material K. The identifying information may be any information as long as it is information for identifying the forming material K. The identifying information may be a unique number (serial number) individually assigned to each forming material K, or may be other information.

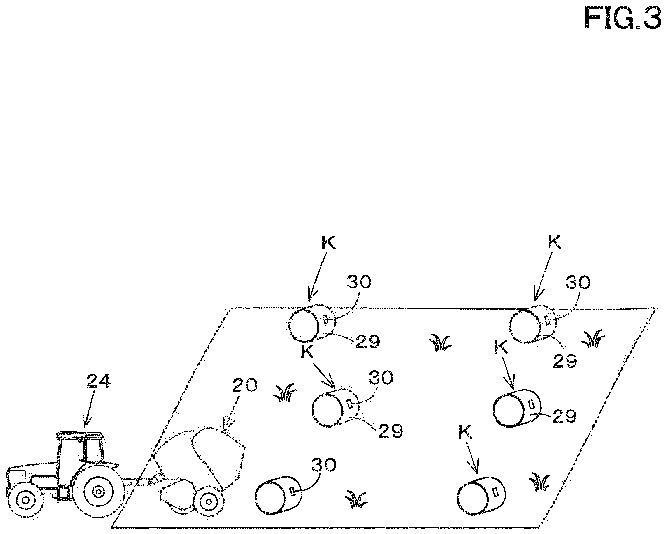

FIG. 3 shows a state in which the forming material K is formed by running the roll baler 20 on a farm or the like. As shown in FIG. 3, in the roll baler 20, since the roll forming material K is discharged to the farm each time the roll forming material K is formed, there are many roll forming materials K discharged from the roll baler 20 on the farm.

An operator or the like prepares the RFID tag 30 in advance and attaches the RFID tag 30 to the roll forming material K discharged to the farm. An operator installs one RFID tag 30 per the roll forming material K. On the farm, the roll forming material K is in a state where the side portion (a side surface) is in contact with the ground of the farm and is sideways.

A packing material 29 such as a net is wrapped around the side of the roll forming material K. For example, the operator attaches the RFID tag 30 to the packing material 29 wrapped around the side of the roll forming material K. As described above, the RFID tag 30 is attached to the packing material 29, but it may be attached to a place other than the packaging material 29 or may be attached to the bottom portion (the bottom surface) of the roll forming material.

As shown in FIG. 1, the crops management system has a management device 40. The management device 40 is a computer such as a server, a mobile terminal, a personal computer, or the like. Note that the portable terminal is a computer that is easy to carry and is a smartphone (a multi-function mobile phone), a tablet, or the like. In this embodiment, the management apparatus 40 is a server.

The server 40 has an obtaining part 41 and a first storage part 42. The obtaining part 41 is composed of a program and the like stored in the server 40, and acquires the identifying information of the RFID tag 30 from the outside. The first storage part 42 is a nonvolatile memory and stores identifying information and the like of the RFID tag 30 acquired by the obtaining part 41.

A method of acquiring the identifying information of the RFID tag 30 by the obtaining part 41 includes a method of reading the identifying information of the RFID tag 30 to the RFID reader 50 and transmitting the read identifying information to the server 40. That is, the crops management system includes the RFID tag 30, that is, the RFID reader 50 (a wireless tag reader) capable of receiving the identifying information of the wireless tag.

The RFID reader 50 is, for example, a portable reader that can be carried by a operator, and has a reading part 51 and an outputting part 52. When the reading part 51 is an antenna or the like and the RFID tag 30 is a passive type RFID tag 30, the reading part 51 irradiates radio waves to the RFID tag 30 and obtains the identifying information of the RFID tag 30 transmitted from the RFID tag 30.

When the RFID tag 30 is the active type RFID tag 30, the reading part 51 requests identifying information from the RFID tag 30 and acquires the identifying information of the RFID tag 30 transmitted from the RFID tag 30 in response to the request.

In the case where the RFID tag 30 is the active type RFID tag 30, the reading part 51 may obtain the identifying information of the RFID tag 30 arbitrarily transmitted from the RFID tag 30 without requesting the identifying information to the RFID tag 30.

The outputting part 52 is a communication device that performs the short-range communication or the long-range communication by radio or the like. When the communication device performs communication over a long distance, the outputting part 52 transmits the identifying information of the RFID tag 30 acquired by the reading part 51 to the server 40.

In addition, in the case of a communication device performing the short-range communication, the outputting part 52 transmits the identifying information of the RFID tag 30 acquired by the reading part 51 to a computer (hereinafter referred to as an operator computer) 60 owned by the operator or the like, which does not form part of the claimed invention.

The operator computer 60 receives the identifying information of the RFID tag 30 transmitted from the outputting part 52 of the RFID reader 50, and then transmits the received identifying information to the server 40. The operator computer 60 is, for example, a mobile terminal, a personal computer, or the like.

When transmitting the identifying information of the RFID tag 30 to the server 40 by the RFID reader 50, the information (the user information) on the operator is registered in advance in the RFID reader 50, and together with the user information registered in the RFID reader 50. It is preferable to transmit the identifying information read by the RFID reader 50 to the server 40.

Specifically, the RFID reader 50 has a display part 53. The display part 53 is, for example, a liquid crystal panel monitor or the like, and can display various information. The display part 53 of the RFID reader 50 displays the user registration screen. On the registration screen, user information such as the name, address, phone number, user ID, password, and the like. of the operator can be entered.

The operator registers the user information in the RFID reader 50 by inputting the user information on the registration screen by using an interface or the like provided in the RFID reader 50.

The method of registering the user information in the RFID reader 50 may be another method. For example, displaying a user registration screen on the operator computer 60, registering the user information entered in the user registration screen in the operator computer 60, and transferring the user information registered in the operator computer 60 to the RFID reader 50. The user information may be registered in the RFID reader 50.

By thus transmitting the user information registered in the RFID reader 50 to the server 40 together with the identifying information of the RFID tag 30, the server 40 associates the identifying information of the RFID tag 30 with the user information, and stores them in the first storage part 42.

Note that, before transmitting the identifying information from the RFID reader 50 to the server 40, the RFID reader 50 or the operator computer 60 is connected to the server 40 in advance and the user information is transmitted to the server 40, whereby the user information may be registered the server 40.

In addition, when registering the user information, the server 40 issues a login ID, a password, and the like, and transmits the login ID and password to the RFID reader 50 or the operator computer 60. The RFID reader 50 or the operator computer 60 registers the login ID, password, and the like issued by the server 40.

In this case, after logging in to the server 40 using the login ID and the password, the operator computer 60 or the RFID reader 50 transmits the identifying information of the RFID tag 30 to the server 40.

The server 40 receives the identifying information and the user information of the RFID tag 30 transmitted from the RFID reader 50 or the operator computer 60 as described above. The obtaining part 41 of the server 40 acquires the identifying information and the user information of the RFID tag 30 when the server 40 receives the identifying information and the user information of the RFID tag 30.

In addition, the obtaining part 41 of the server 40 acquires not only the identifying information of the RFID tag 30 but also the forming material information of the forming material K. The server 40 receives the forming material information (the weight, the moisture, the time) transmitted from the communication device 11. When the server 40 receives the forming material information (the weight, the moisture, the time), the obtaining part 41 acquires the forming material information.

The server 40 has an relating part 43 and a second storage part 44. The relating part 43 is composed of a program and the like stored in the server 40. The second storage part 44 is composed of a nonvolatile memory or the like. Hereinafter, for convenience of description, the identifying information of the RFID tag 30 may be referred to as a "tag identifying information" in some cases.

The relating part 43 associates the tag identifying information acquired by the obtaining part 41 with the forming material information acquired by the obtaining part 41. The association by the relating part 43 will be described.

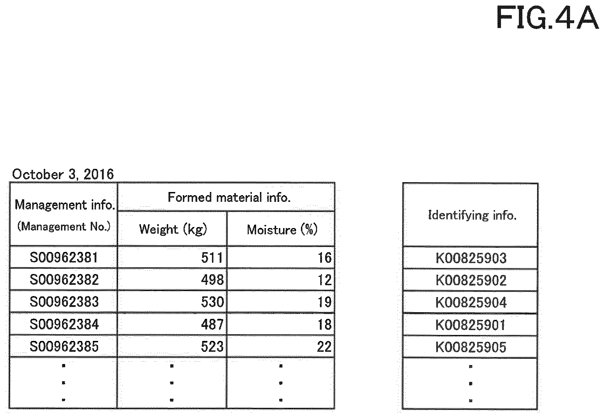

FIG. 4A shows the tag identifying information, the weight and the moisture which are the forming material information acquired by the obtaining part 41 on a predetermined date (for example, October 3, 2016). As shown in FIG. 4A, the forming material information is generated every time the roll forming material K is formed, and the number of the forming material information corresponds to the number of the roll forming material K.

In addition, since one RFID tag 30 is attached to one roll forming material K in the roll forming material K, the number of tag identifying information corresponds to the number of roll forming materials K. Also, the control number shown in FIG. 4A is increased every time the roll forming material K is formed, which means that the larger the number is, the longer the forming time is.

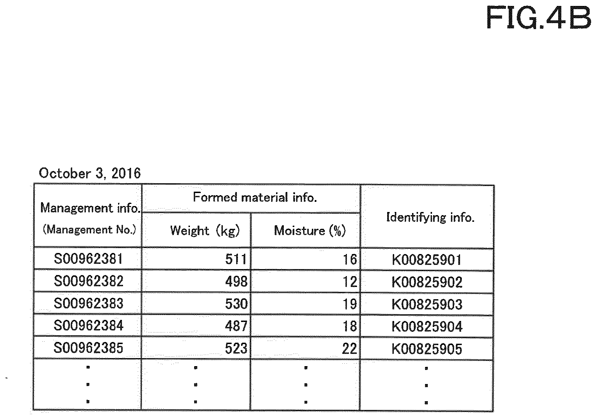

FIG. 4B shows the weight and the moisture of the roll forming material K and the tag identifying information associated with each other by the relating part 43. As shown in FIG. 4B, the relating part 43 refers to the management number corresponding to the predetermined date, and relates the weight and moisture corresponding to the roll forming material K having the smallest management number with the tag identifying information having the smallest number of the plurality of pieces of tag identifying information.

In addition, the relating part 43 associates the weight and moisture corresponding to the roll forming material K having the largest management number with the tag identifying information having the largest number among the plurality of pieces of tag identifying information. That is, the relating part 43 arranges the management number and the tag identifying information sequentially, and associates the weight and moisture corresponding to the management numbers arranged in order with the tag identifying information. The associated forming material information (the weight, the moisture) and the tag identifying information are stored in the second storage part 44 by the associating part 43.

In FIG. 4A, the obtaining part 41 of the server 40 acquires the weight and moisture, but when the obtained forming material information is only the weight, as a matter of course, the relating part 43 associates the weight and the tag identifying information with each other. In addition, when the acquired forming material information is only the moisture, the relating part 43 associates the moisture with the tag identifying information.

When the time (the start time, the end time, the discharge time) is included in the forming material information, the weight and moisture and the tags can be related to each other, using the times (the start time, the end time, the discharge time) instead of the management number.

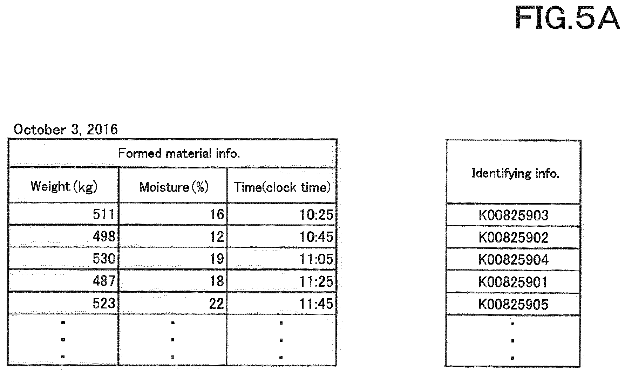

FIG. 5A shows the weight, the moisture, the discharge time, and the tag identifying information acquired by the obtaining part 41 of the roll forming material K at a predetermined date (for example, October 3, 2016). As shown in FIG. 5A, no control number is attached to the forming material information.

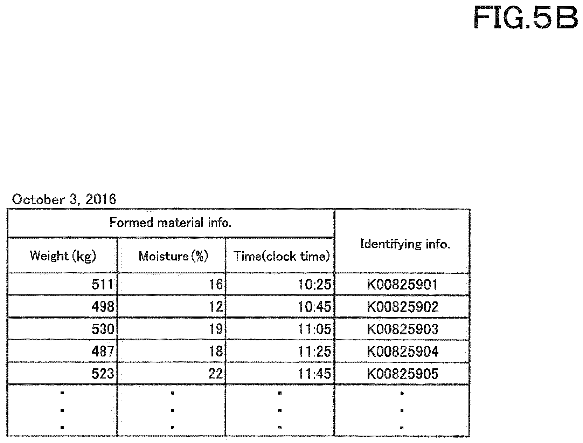

FIG. 5B shows the forming material information and tag identifying information associated by the relating part 43. As shown in FIG. 5B, the relating part 43 refers to the discharge time of the roll forming material K at a predetermined date, and associates the weight and the moisture of the latest discharge time in the forming material information with the tag identifying information of the smallest number among the plurality of pieces of tag identifying information.

In addition, the relating part 43 associates the weight and moisture having the latest discharge time in the forming material information with the tag identifying information having the largest number among the plurality of tag identifying information. The relating part 43 may associate the weight and moisture of the roll forming material K with the tag identifying information using the start time, the end time, and the like.

That is, the relating part 43 associates the weight and moisture with the tag identifying information based on the time (the start time, the end time, the discharge time) included in the forming material information. When the forming material information is only time (the start time, the end time, the discharge time), the relating part 43 associates the time with the tag identifying information.

As described above, the crops management system includes the information output device 10 that outputs the forming material information, the RFID tag 30 that stores the identifying information of the forming material K, and the management device 40. Thus, it is possible to grasp the roll forming material K only by reading the tag identifying information provided on the roll forming material K with the RFID reader 50 or the like and outputting it to the management device 40, without describing the information (the date, the agriculture, and the like.) on the roll forming material K by handwriting on the surface of the roll forming material K or the like in order to distinguish the roll forming material K discharged to the farmer by the operator.

For example, when the information output device 10 has the weight detection device 12, the weight of the roll forming material K can be grasped based on the tag identifying information associated with the relating part 43 of the management device 40, as shown in FIG. 4B.

In addition, when the information output device 10 has the moisture detection device 13, it is possible to grasp the moisture of the roll forming material K based on the tag identifying information associated by the associating portion 43 of the management device 40.

When the information output device 10 has the time counting device 14, the time (the forming time, the start time, the end time, the discharge time) can be grasped based on the tag identifying information associated with the relating part 43 of the management device 40.

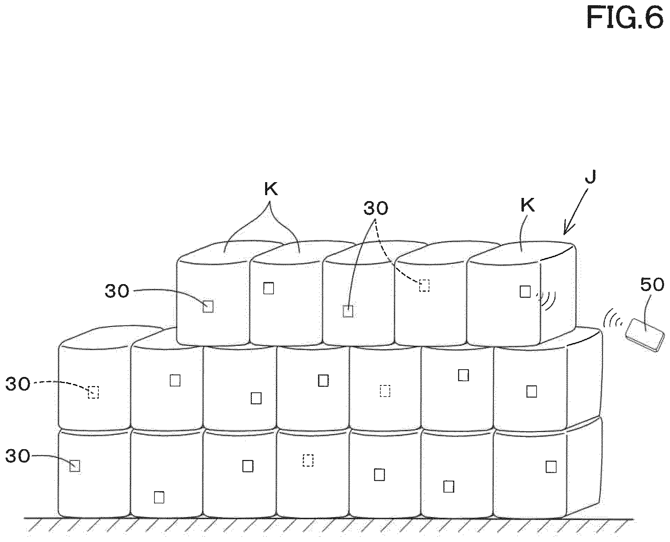

For example, as shown in FIG. 6, the roll forming material K formed by the roll baler 20 is stacked at the storage location J and stored. In many cases, the orientation of the RFID tag 30 in a plurality of roll forming materials K is not constant, and the position of the RFID tag 30 may not be seen from a predetermined position as indicated by a broken line in some cases.

However, by holding the RFID reader 50 over a predetermined roll forming material K stacked in the storage location J, the identifying information of the RFID tag 30 can be read. By transmitting the read identifying information to the server 40, it is possible to grasp the weight, the moisture, the start time, the end time, the discharge time, and the like of the predetermined roll forming material K.

As shown in FIG. 1, the RFID reader 50 preferably has a requesting part 54. The requesting part 54 is composed of a program and the like stored in the RFID reader 50. The requesting part 54 requests the management device 40 for forming material information associated with the tag identifying information read by the reading part 51.

Specifically, the requesting part 54 outputs a request for forming material information together with tag identifying information to the server 40. The server 40 refers to the second storage part 44 based on a request from the requesting part 54 of the RFID reader 50 and extracts the forming material information associated with the tag identifying information corresponding to the request.

In addition, the server 40 transmits the extracted forming material information to the RFID reader 50 which made the request for the forming material information. After receiving the forming material information transmitted from the server 40, the RFID reader 50 displays the forming material information obtained by the request of the requesting part 54 on the display part 53.

In the above-described embodiment, the forming material information is transmitted from the communication device 11 provided in the roll baler 20 directly to the server 40. However, after transmitting the forming material information to the operator computer 60, the forming material information may be transmitted from the operator computer 60 to the server 40.

### (Second embodiment)

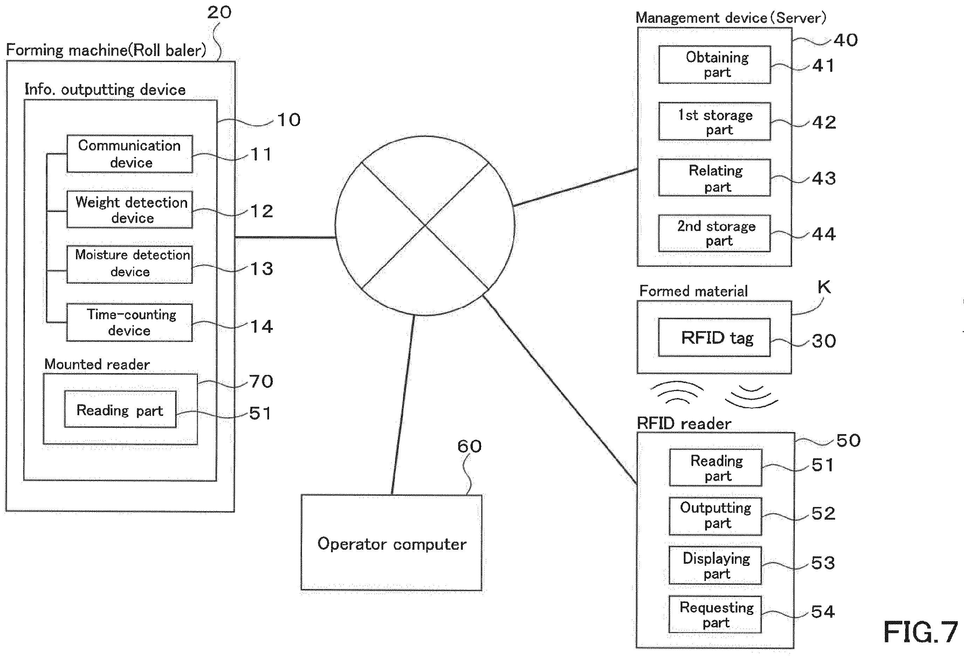

FIG. 7 shows the crops management system according to the second embodiment. The second embodiment is a modification of the crops management system shown in the first embodiment. Descriptions of configurations similar to those in the first embodiment will be omitted.

As shown in FIG. 7, the roll baler 20 includes an RFID tag 30, that is, an RFID reader (a wireless tag reader) 70 capable of receiving the identifying information of a wireless tag. For convenience of explanation, the RFID reader 70 provided in the roll baler 20 is referred to as a mounted reader. Like the RFID reader 50 of the first embodiment, the mounted reader 70 includes a reading part 51. The configuration of the reading part 51 is the same as that of the first embodiment, so its description is omitted.

The mounted leader 70 is provided in the vicinity of the discharge portion 28 or the discharge portion 28 for discharging the forming material K formed by the forming portion 27. Specifically, the discharge portion 28 is formed of a rectangular cover or the like that is openable and closable with respect to the housing portion 26, and is provided on the rear surface, the side surface, or the like of the cover. The reading part 51 of the mounted reader 70 is oriented inward of the cover and can detect the tag identifying information attached to the roll forming material K as described later.

The mounted reader 70 is connected to the communication device 11. Every time the roll forming material K is discharged from the discharging unit 28, the reading part 51 of the mounted leader 70 reads the information of the RFID tag 30 attached to the roll forming material K and transmits the read tag identifying information to the communication device 11. Upon receiving the tag identifying information, the communication device 11 outputs the tag identifying information to the server 40 or the like.

In addition, the communication device 11 transmits the forming material information to the server 40. In the mounted reader 70, the same function as that of the communication device 11 may be provided so that the tag reader 70 transmits the tag identifying information directly to the server 40.

There are various methods for attaching the RFID tag 30 of the roll forming material K. For example, the RFID tag 30 is attached to the packing material 29 for packing the roll forming material K in advance, and the packaging material 29 is wound by the winding mechanism, whereby the RFID tag 30 is attached to the roll forming material K.

Alternatively, a pasting machine may be provided for affixing the RFID tag 30 to the roll forming material K to the forming apparatus 23 of the roll baler 20, and when the packing material 29 is wound around the roll forming material K by the winding mechanism, the pasting machine may attach the RFID tag 30 to the material 29. The attachment of the RFID tag 30 to the roll forming material K is not limited to this, and other methods may be employed.

The server 40 receives the tag identifying information transmitted from the communication device 11 or the mounted reader 70. In addition, the server 40 receives the forming material information transmitted from the communication device 11. The relating part 43 and the second storage part 44 of the server 40 are the same as those in the first embodiment.

According to the crops management system of the second embodiment, every time the roll forming material K is discharged from the roll baler 20, the mounted leader 70 can automatically acquire the tag identifying information attached to the roll forming material K, the acquisition of the tag identifying information attached to the roll forming material K can be automated.

When transmitting the tag identifying information from the communication device 11 or the mounted reader 70 to the server 40, the user information is registered in the communication device 11 or the mounted reader 70 in advance, and the communication device 11 or the mounted reader 70 together with the tag identifying information may be transmitted to the server 40.

In addition, in the above-described embodiment, the forming material information and the tag identifying information are transmitted from the communication device 11 or the mounting reader 70 provided in the roll baler 20 directly to the server 40. However, instead of this, the forming material information and the tag identifying information may be transmitted to the server 40 via the operator computer 60.

In the case of going through the operator computer 60, it is not necessary to register the user information in the communication device 11 and the mounted reader 70, and the user is registered in the operator computer 60 and the operator computer 60 sends the user's information to the server 40 when transmitting the forming material information and the tag identifying information may be transmitted, the user information being registered in the operator computer 60.

In the above description, the embodiment of the present invention has been explained. However, all the features of the embodiment disclosed in this application should be considered just as examples, and the embodiment does not restrict the present invention accordingly. A scope of the present invention is shown not in the above-described embodiment but in claims, and is intended to include all modifications within and equivalent to a scope of the claims.

The information output device 10 may be a detection device that measures and outputs protein of the forming material K as a device that outputs forming material information, or a detection device that measures and outputs vitamins of the forming material K, or may be a detection device that measures and outputs the starch value of the forming material K or a detection device that measures and outputs the fiber quality of the forming material K.

In addition, in the above-described embodiment, the identifying information of the RFID tag 30 and the forming material information are associated, but in addition to this, the position of the work and the forming material information may be associated with each other. For example, a position detecting device for detecting a position based on a signal of a positioning satellite such as GPS may be provided in any one of the forming machine 20, the RFID reader 50, and the operator computer 60, and the position detected by the position detecting device and the formed material information may be related to each other.

In addition, it is also possible to previously input the grass type (the crops type) to the forming machine 20, the management device 40, the RFID reader 50, the operator computer 60, and the like, and the crops type may be associated with the forming material information.

### [DESCRIPTION OF THE REFERENCE NUMERAL]

- 10: Information outputting device
- 12: Weight detection device
- 13: Moisture detection device
- 14: Tome-counting device
- 20: Forming machine
- 28: Discharging part
- 30: RFID tag (Wireless tag)
- 40: Management device
- 41: Obtaining part
- 43: Relating part
- 50: RFID reader (Wireless tag reader)
- 51: Reading part
- 52: Outputting part
- 53: Displaying part

## Claims

1. A crops management system comprising:
an information outputting device (10) disposed on a forming machine (20) configured to form crops into a formed material (K) having a predetermined shape, the information outputting device (10) having:
a communication device (11) configured to output formed material information relating to the formed material (K);
a time counting device (14) configured to measure a discharge time at which the formed material (K) is discharged outside from the forming machine (20) and transmit the discharge time to the communication device (11);
a weight detection device (12) configured to detect a weight of the formed material (K) at the discharge time and output the weight to the communication device (11) as the formed material information; and
a moisture detection device (13) configured to detect moisture of the formed material (K) at the discharge time and output the moisture to the communication device (11) as formed material information;
a wireless tag (30) disposed on the formed material (K) and configured to store identifying information of the formed material (K);
a management device, wherein the management device is server (40) having:
an obtaining part (41) configured to obtain the identifying information of the formed material (K) and the formed material information of the formed material (K);
a first storage part (42) configured to store the identifying information of the formed material (K) obtained by the obtaining part (41);
a relating part (43) configured to relate the formed material information to the identifying information obtained by the obtaining part (41); and
a second storage part (44) configured to store the formed material information which is related to the identifying information by the relating part (43);
a wireless tag reader (50) having:
a reading part (51) configured to read the identifying information stored in the wireless tag (30); and
an outputting part (52) configured to output, to the server (40), the identifying information read by the reading part (51),
wherein the information outputting device (10) is configured to output to the server (40) the formed material information and either one of
management information which is attached to the weight and the moisture every time the weight and the moisture are outputted to the communication device (11), and
the discharge time which is attached to the formed material information, and
wherein the obtaining part (41) of the server (40) is configured to obtain the formed material information and either one of the management information and the discharge time from the information outputting device (10) and the identifying information from the outputting part (52) of the wireless tag reader (50), and
wherein the relating part (43) of the server (40) is configured to relate the formed material information obtained by the obtaining part (41) from the information outputting device (10), through either one of the management information and the discharge time, to the identifying information obtained by the obtaining part (41) from the wireless tag reader (50).

2. The crops management system according to claim 1,
wherein the obtaining part (41) is configured to obtain the weight detected by the weight detection device (12),
and wherein the relating part (43) is configured to relate the identifying information to the weight.

3. The crops management system according to claim 1 or claim 2,
wherein the obtaining part (41) is configured to obtain the moisture detected by the moisture detection device (13),
and wherein the relating part (43) is configured to relate the identifying information to the moisture.

4. The crops management system according to any one of claims 1 to 3,
wherein the time-counting device (14) is configured to output, as the formed material information, time for forming the formed material (K) by the forming machine (20),
wherein the obtaining part (41) is configured to obtain the time counted by the time-counting device (14),
and wherein the relating part (43) is configured to relate the identifying information to the time.

5. The crops management system according to any one of claims 1 to 4,
wherein the wireless tag reader (50) has:
a requesting part (54) configured to request, to the server (40), the formed material information related to the identifying information read by the reading part (51); and
a displaying part (53) configured to display the formed material information obtained based on the request of the requesting part (54).

6. The crops management system according to any one of claims 1 to 5,
wherein the forming machine (20) is a forming machine (20) configured to form the formed materials (K) having a rolled shape.

## Patentansprüche

1. Ein Erntegutverwaltungssystem, das Folgendes umfasst:
eine Informationsausgabevorrichtung (10), die an einer Formmaschine (20) angeordnet ist, die dazu konfiguriert ist, Erntegut zu einem geformten Material (K) mit einer vorbestimmten Form zu formen, wobei die Informationsausgabevorrichtung (10) Folgendes aufweist:
eine Kommunikationsvorrichtung (11), die dazu konfiguriert ist, Informationen über das geformte Material (K) auszugeben;
eine Zeitzähleinrichtung (14), die dazu konfiguriert ist, einen Entladezeitpunkt zu messen, zu dem das geformte Material (K) aus der Formmaschine (20) nach außen entladen wird, und den Entladezeitpunkt an die Kommunikationseinrichtung (11) zu übermitteln;
eine Gewichtserfassungsvorrichtung (12), die dazu konfiguriert ist, ein Gewicht des geformten Materials (K) zum Entladezeitpunkt zu erfassen und das Gewicht an die Kommunikationsvorrichtung (11) als die Information über das geformte Material auszugeben; und
eine Feuchtigkeitserfassungsvorrichtung (13), die dazu konfiguriert ist, eine Feuchtigkeit des geformten Materials (K) zum Entladezeitpunkt zu erfassen und die Feuchtigkeit an die Kommunikationsvorrichtung (11) als Information über das geformte Material auszugeben;
ein drahtloses Etikett (*wireless tag*) (30), das auf dem geformten Material (K) angeordnet und konfiguriert ist, um Identifizierungsinformationen des geformten Materials (K) zu speichern;
eine Verwaltungsvorrichtung, wobei die Verwaltungsvorrichtung ein Server (40) ist, der Folgendes aufweist:
ein Erlangungsteil (41), das dazu konfiguriert ist, die Identifizierungsinformationen des geformten Materials (K) und die Informationen über das geformte Material des geformten Materials (K) zu erlangen;
ein erstes Speicherteil (42), das dazu konfiguriert ist, die Identifizierungsinformationen des geformten Materials (K) zu speichern, die vom Erlangungsteil (41) erlangt wurden;
ein Zuordnungs- bzw. Bezugsteil (*relating part*) (43), das dazu konfiguriert ist, die Informationen über das geformte Material mit den vom Erlangungsteil (41) erhaltenen Identifizierungsinformationen in Beziehung zu setzen; und
ein zweites Speicherteil (44), das dazu konfiguriert ist, die Informationen über das geformte Material zu speichern, die durch das Bezugsteil (43) mit den Identifizierungsinformationen in Beziehung gesetzt werden;
ein drahtloses Etikett-Lesegerät (50), das Folgendes aufweist:
ein Leseteil (51), das dazu konfiguriert ist, die im drahtlosen Etikett (30) gespeicherte Identifizierungsinformationen zu lesen; und
ein Ausgabeteil (52), das dazu konfiguriert ist, die vom Leseteil (51) gelesenen Identifizierungsinformationen an den Server (40) auszugeben,
wobei die Informationsausgabevorrichtung (10) so konfiguriert ist, dass sie Folgendes an den Server (40) ausgibt: die Informationen über das geformte Material und eine beliebige der folgenden Informationen: Managementinformationen, die mit dem Gewicht und der Feuchtigkeit verknüpft sind, jedes Mal, wenn das Gewicht und die Feuchtigkeit an die Kommunikationsvorrichtung (11) ausgegeben werden, oder den Entladezeitpunkt, der mit den Informationen über das geformte Material verknüpft ist, und
wobei das Erlangungsteil (41) des Servers (40) so konfiguriert ist, dass es Folgendes erlangt: die Informationen über das geformte Material und entweder die Verwaltungsinformationen oder den Entladezeitpunkt von der Informationsausgabevorrichtung (10) und die Identifizierungsinformationen vom Ausgabeteil (52) des drahtlosen Etikett-Lesegeräts (50), und
wobei das Bezugsteil (43) des Servers (40) so konfiguriert ist, dass es die Informationen über das geformte Material, die durch das Erlangungsteil (41) von der Informationsausgabevorrichtung (10) erhalten wurden, durch ein beliebiges von den Managementinformationen und dem Entladezeitpunkt mit den Identifizierungsinformationen in Beziehung setzt, die durch das Erlangungsteil (41) vom drahtlosen Etikett-Lesegerät (50) erhalten wurden.

2. Das Erntegutverwaltungssystem nach Anspruch 1,
wobei das Erlangungsteil (41) so konfiguriert ist, dass es das von der Gewichtserfassungsvorrichtung (12) erfasste Gewicht erlangt,
und wobei das Bezugsteil (43) so konfiguriert ist, dass es die Identifizierungsinformationen mit dem Gewicht in Beziehung setzt.

3. Das Erntegutverwaltungssystem nach Anspruch 1 oder Anspruch 2,
wobei das Erlangungsteil (41) so konfiguriert ist, dass es die von der Feuchtigkeitserfassungsvorrichtung (13) erfasste Feuchtigkeit erlangt,
und wobei das Bezugsteil (43) so konfiguriert ist, dass es die Identifizierungsinformationen mit der Feuchtigkeit in Beziehung setzt.

4. Das Erntegutverwaltungssystem nach irgendeinem der Ansprüche von 1 bis 3,
wobei die Zeitzähleinrichtung (14) so konfiguriert ist, dass sie als die Informationen über das geformte Material die Zeit zur Formung des geformten Materials (K) durch die Formmaschine (20) ausgibt,
wobei das Erlangungsteil (41) so konfiguriert ist, dass es die von der Zeitzähleinrichtung (14) gezählte Zeit erlangt,
und wobei das Bezugsteil (43) so konfiguriert ist, dass es die Identifizierungsinformationen mit der Zeit in Beziehung setzt.

5. Das Erntegutverwaltungssystem nach irgendeinem der Ansprüche von 1 bis 4,
wobei das drahtlose Etikett-Lesegerät (50) Folgendes aufweist:
ein anforderndes Teil (54), das dazu konfiguriert ist, beim Server (40) die Informationen über das geformte Material anzufordern, die sich auf die vom Leseteil (51) gelesenen Identifizierungsinformationen beziehen; und
ein Anzeigeteil (53), das dazu konfiguriert ist, die Informationen über das geformte Material anzuzeigen, die auf der Grundlage der Anforderung des Anforderungsteils (54) erhalten wurden.

6. Das Erntegutverwaltungssystem nach irgendeinem der Ansprüche von 1 bis 5,
wobei die Formmaschine (20) eine Formmaschine (20) ist, die so konfiguriert ist, dass sie die geformten Materialien (K) mit einer gerollten Form formt.

## Revendications

1. Un système de gestion des récoltes comprenant :
un dispositif de sortie d'informations (10) disposé sur une machine de formage (20) configurée pour former des cultures en un matériau formé (K) ayant une forme prédéterminée, le dispositif de sortie d'informations (10) présentant :
un dispositif de communication (11) configuré pour émettre des informations sur le matériau formé concernant le matériau formé (K) ;
un dispositif de comptage de temps (14) configuré pour mesurer un temps de décharge auquel le matériau formé (K) est déchargé à l'extérieur de la machine de formage (20) et pour transmettre le temps de décharge au dispositif de communication (11) ;
un dispositif de détection de poids (12) configuré pour détecter un poids du matériau formé (K) au moment de la décharge et pour transmettre le poids au dispositif de communication (11) en tant qu'information sur le matériau formé ; et
un dispositif de détection de l'humidité (13) configuré pour détecter l'humidité du matériau formé (K) au moment de la décharge et pour transmettre l'humidité au dispositif de communication (11) en tant qu'information sur le matériau formé ;
une étiquette sans fil (30) disposée sur le matériau formé (K) et configurée pour stocker des informations d'identification du matériau formé (K) ;
un dispositif de gestion, sachant que le dispositif de gestion est un serveur (40) présentant :
une partie d'obtention (41) configurée pour obtenir les informations d'identification du matériau formé (K) et les informations sur le matériau formé concernant le matériau formé (K) ;
une première partie de stockage (42) configurée pour stocker les informations d'identification du matériau formé (K) obtenues par la partie d'obtention (41) ;
une partie de mise en relation (43) configurée pour relier les informations sur le matériau formé aux informations d'identification obtenues par la partie d'obtention (41) ; et
une deuxième partie de stockage (44) configurée pour stocker les informations sur le matériau formé qui sont liées aux informations d'identification par la partie de mise en relation (43) ;
un lecteur d'étiquettes sans fil (50) présentant :
une partie de lecture (51) configurée pour lire les informations d'identification stockées dans l'étiquette sans fil (30) ; et
une partie de sortie (52) configurée pour transmettre au serveur (40) les informations d'identification lues par la partie de lecture (51),
sachant que le dispositif de sortie d'informations (10) est configuré pour transmettre au serveur (40) les informations sur le matériau formé et l'une ou l'autre parmi les informations de gestion associées au poids et à l'humidité chaque fois que le poids et l'humidité sont transmis au dispositif de communication (11), et le temps de décharge qui est associé à l'information sur le matériau formé, et
sachant que la partie d'obtention (41) du serveur (40) est configurée pour obtenir les informations sur le matériau formé et l'une ou l'autre parmi les informations de gestion et le temps de décharge de la part du dispositif de sortie d'informations (10) et les informations d'identification à partir de la partie de sortie (52) du lecteur d'étiquettes sans fil (50), et
sachant que la partie de mise en relation (43) du serveur (40) est configurée pour relier les informations sur le matériau formé obtenues par la partie d'obtention (41) de la part du dispositif de sortie d'informations (10), par l'intermédiaire de l'une ou l'autre parmi les informations de gestion et le temps de décharge, aux informations d'identification obtenues par la partie d'obtention (41) du lecteur d'étiquettes sans fil (50).

2. Le système de gestion des récoltes d'après la revendication 1,
sachant que la partie d'obtention (41) est configurée pour obtenir le poids détecté par le dispositif de détection de poids (12),
et sachant que la partie de mise en relation (43) est configurée pour relier l'information d'identification au poids.

3. Le système de gestion des récoltes d'après la revendication 1 ou la revendication 2,
sachant que la partie d'obtention (41) est configurée pour obtenir l'humidité détectée par le dispositif de détection d'humidité (13),
et sachant que la partie de mise en relation (43) est configurée pour mettre en relation l'information d'identification avec l'humidité.

4. Le système de gestion des récoltes d'après l'une quelconque des revendications de 1 à 3,
sachant que le dispositif de comptage de temps (14) est configuré pour émettre, en tant qu'information sur le matériau formé, le temps pour former le matériau formé (K) par la machine de formage (20),
sachant que la partie d'obtention (41) est configurée pour obtenir le temps compté par le dispositif de comptage de temps (14),
et sachant que la partie de mise en relation (43) est configurée pour mettre en relation l'information d'identification avec le temps.

5. Le système de gestion des récoltes d'après l'une quelconque des revendications de 1 à 4,
sachant que le lecteur d'étiquettes sans fil (50) présente :
une partie de requête (54) configurée pour demander au serveur (40) les informations sur le matériau formé liées aux informations d'identification lues par la partie de lecture (51) ; et
une partie d'affichage (53) configurée pour afficher les informations sur le matériau formé obtenues sur la base de la demande de la partie de requête (54).

6. Le système de gestion des récoltes d'après l'une quelconque des revendications 1 à 5, sachant que la machine de formage (20) est une machine de formage (20) configurée pour former les matériaux formés (K) ayant une forme roulée.
